# EUROPEAN PATENT APPLICATION

(11) **EP 4 468 575 A1**
(43) Date of publication of application: **27.11.2024**
(21) Application number: 24169871.1
(22) Date of filing: 12.04.2024
(51) Int. Cl.: H02K 11/33, H02K 7/14

(54) **ELECTRONIC DEVICE**

(30) Priority: 13.04.2023 JP 2023065723
(71) Applicant: Minebea Mitsumi Inc., Kitasaku-gun, Nagano 3890293 (JP)
(72) Inventor: AMAGI, Yuta, NAGANO, 389-0293 (JP); NISHIKATA, Toshiyuki, NAGANO, 389-0293 (JP); KASAI, Shogo, NAGANO, 389-0293 (JP); SHIBUYA, Kyohei, NAGANO, 389-0293 (JP); INOUE, Tomohiro, NAGANO, 389-0293 (JP)
(74) Representative: Regimbeau

(57) **Abstract**

An electronic device (1) includes a casing (10) including a cover (12) including a hole (17a) and a surface (17b) forming the hole (17a), a housing (11) covered by the cover (12), a motor (30) accommodated in the cover (12), and one or a plurality of electronic components (50) accommodated in the housing (11). A shaft (31) of the motor (30) is disposed inside the hole (17a) of the cover (12). The shaft (31) is provided with a bush (42). The bush (42) opposes the surface (17b) of the cover (12) in the longitudinal direction of the shaft (31).

## Description

### Technical Field

The present invention relates to an electronic device.

### Background Art

As disclosed in Patent Document 1, for example, an electric motor incorporated in an on-off valve is known. In this electric motor, a load such as a gate is attached at a shaft. The shaft is rotatably supported by a bearing. The electric motor is accommodated in a casing, and only the shaft protrudes outward from the casing.

### Citation List

### Patent Literature

Patent Document 1: JP 10-313550 A

### Summary of Invention

### Technical Problem

When the on-off valve is assembled, the gate is press-fitted to the shaft along an axial direction of the shaft. As a result of this press-fitting, the shaft is pushed into the electric motor in the axial direction of the shaft. Since the electric motor is accommodated in a casing, the pushing of the shaft is supported only by a bearing. Thus, when the shaft is pushed excessively, the bearing may be damaged.

One of the objects of the present invention is to provide an electronic device capable of avoiding excessive pushing of the shaft into the motor.

### Solution to Problem

An electronic device according to an aspect of the present invention includes a casing including a cover including a hole and a surface forming the hole and a housing covered by the cover, a motor accommodated in the cover, and one or a plurality of electronic components accommodated in the housing. A shaft of the motor is disposed inside the hole of the cover, the shaft is provided with a bush, and the bush opposes a surface of the cover in a longitudinal direction of the shaft.

### Brief Description of Drawings

FIG. 1 is a perspective view schematically illustrating a structure of an electronic device 1 according to one embodiment of the present invention.
FIG. 2 is a cross-sectional view taken along line 2-2 in FIG. 1.
FIG. 3 is a cross-sectional view taken along line 3-3 in FIG. 1.
FIG. 4 is an exploded perspective view schematically illustrating the structure of the electronic device 1 according to one embodiment of the present invention.
FIG. 5 is a partial cross-sectional view schematically illustrating a structure of a ventilation fan unit 60 according to a specific example.

### Description of Embodiments

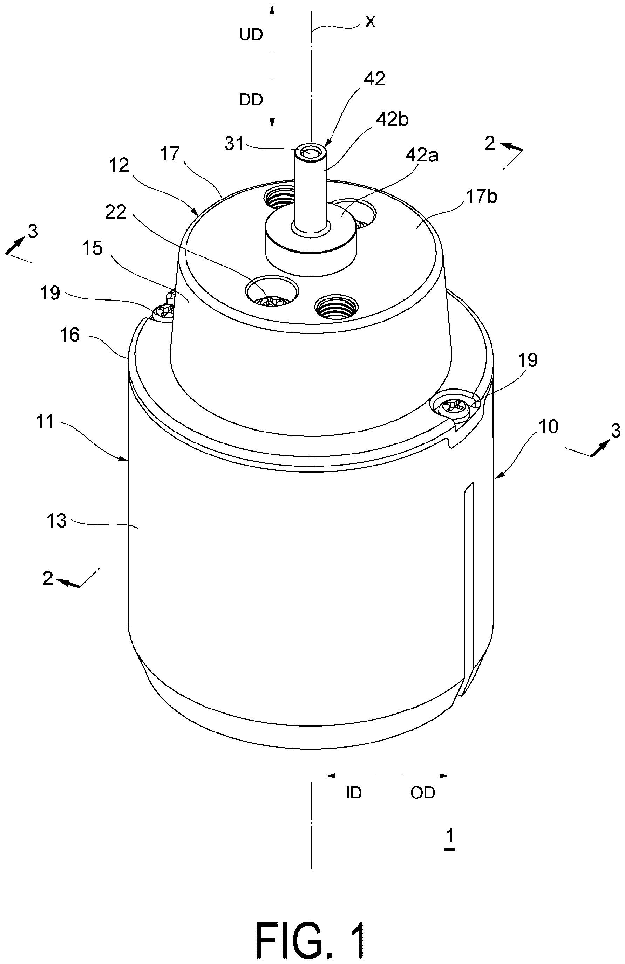

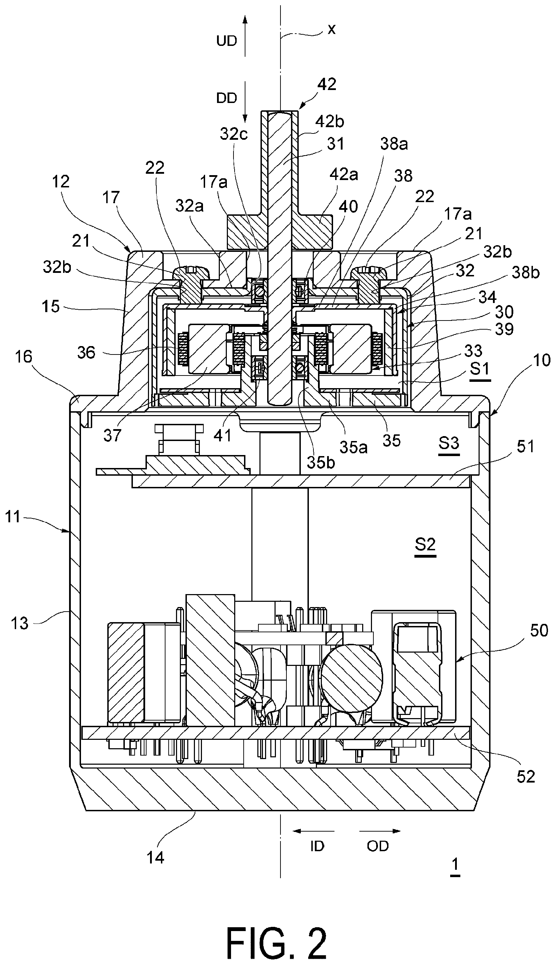

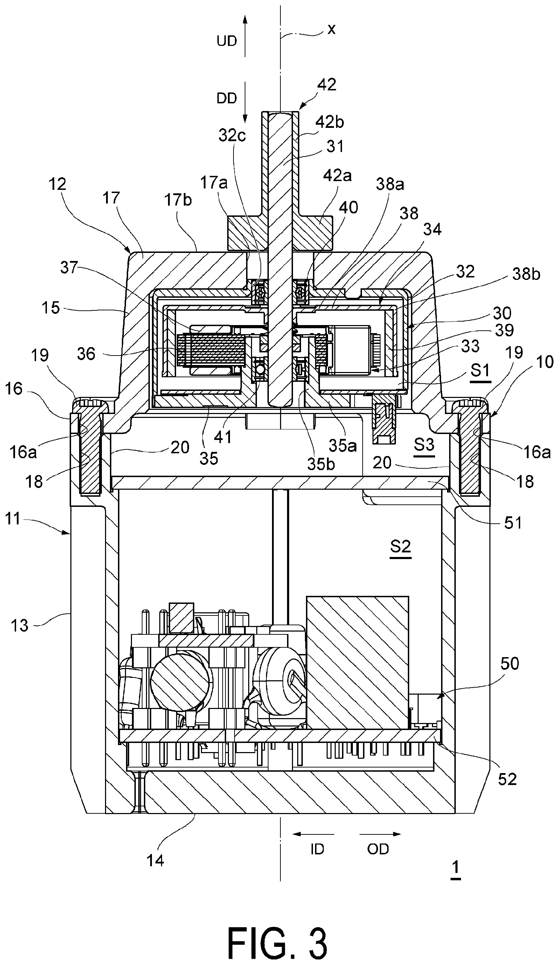

One embodiment of the present invention will be described below with reference to the attached drawings. FIG. 1 is a perspective view schematically illustrating a structure of an electronic device 1 according to one embodiment of the present invention. FIG. 2 is a cross-sectional view taken along line 2-2 in FIG. 1, and FIG. 3 is a cross-sectional view taken along line 3-3 in FIG. 1. Referring to FIGS. 1 to 3, the electronic device 1 includes a casing 10, and a motor 30 and one or a plurality of electronic components 50 accommodated in the casing 10. The electronic device 1 is, for example, a module incorporated at a smart home appliance. As will be described later, the electronic device 1 is incorporated into, for example, a ventilation fan unit used in a general household.

In the electronic device 1, in an axial direction defined to be along a rotation axis line x of the motor 30, a direction toward one side is defined as an upward direction UD, and a direction opposite to the upward direction UD is defined as a downward direction DD. The upward direction UD and the downward direction DD do not necessarily coincide with the vertical direction in the gravitational direction. Similarly, in the electronic device 1, in a radial direction orthogonal to the rotation axis line x, a direction toward the rotation axis line x is defined as an inner peripheral direction ID, and a direction opposite to the inner peripheral direction ID is defined as an outer peripheral direction OD. Further, in the electronic device 1, a peripheral direction is defined to be around the rotation axis line x.

The casing 10 includes a housing 11 and a cover 12. The housing 11 includes a side wall part 13 being tubular and a bottom part 14. The bottom part 14 closes, for example, a circular opening defined to be a lower edge of the side wall part 13 in the downward direction DD. In this example, the side wall part 13 is formed in a cylindrical shape with the rotation axis line x as a central axis. The bottom part 14 extends in a circular shape along a virtual plane orthogonal to the rotation axis line x. For example, a circular opening is defined at an upper edge of the side wall part 13 in the upward direction UD. This opening is open, and covered by the cover 12. The housing 11 is formed of, for example, a resin material by integral molding.

The cover 12 includes a tubular part 15, a flange part 16, and an upper part 17. In this example, an outer peripheral surface of the tubular part 15 is formed in a truncated cone shape, for example. The flange part 16 is formed at a lower edge of the tubular part 15 in the downward direction DD. The flange part 16 extends annularly in the outer peripheral direction OD from the lower edge of the tubular part 15. That is, the circular opening at the lower edge of the tubular part 15 is open. A lower surface of the flange part 16 of the cover 12 is received at an upper end of the side wall part 13 of the housing 11. The upper part 17 closes, for example, a circular opening defined to be an upper edge of the tubular part 15 in the upward direction UD. The cover 12 is formed of, for example, a resin material by integral molding.

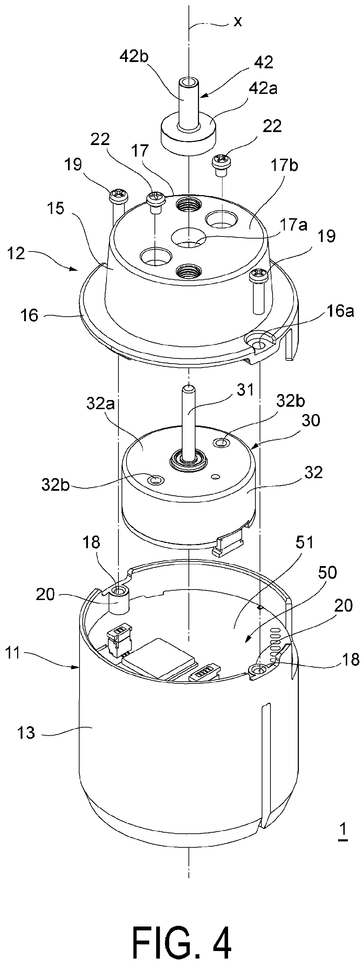

FIG. 4 is an exploded perspective view schematically illustrating the structure of the electronic device 1 according to one embodiment of the present invention. Referring to FIGS. 1 to 4, one or a plurality of fastening members, that is, screws 19 are screwed into hole parts (hereinafter referred to as screw holes) 18 of the side wall part 13 of the housing 11 through through-holes 16a formed at the flange part 16 of the cover 12. Thus, the cover 12 is attached at the housing 11. In this example, a pair of the screws 19 are disposed at an angular gap of 180 degrees around the rotation axis line x. As illustrated in FIG. 4, the screw holes 18 are formed at boss parts 20 as a part of the fastened member integrated with an inner peripheral surface of the side wall part 13.

The motor 30 is accommodated in the cover 12. The motor 30 includes a shaft 31 extending along the rotation axis line x, a base 35, a case 32 coupled to the base 35, a stator 33 supported by the case 32, and a rotor 34 relatively rotating with respect to the stator 33. As illustrated in FIGS. 2 to 4, the case 32 has, for example, a cylindrical outer shape and is completely accommodated in the tubular part 15 of the cover 12. As illustrated in FIG. 2, one or a plurality of fastening members, that is, screws 22 are screwed into the screw holes 32b at an upper part 32a of the case 32 through through-holes 21 formed at the upper part 17 of the cover 12. Thus, the motor 30 is attached at the cover 12. In this example, a pair of the screws 22 are disposed at an angular gap of 180 degrees around the rotation axis line x.

The motor 30 is, for example, an outer rotor type motor. The stator 33 includes a stator core 36 supported by the base 35, and a coil 37. The base 35 includes an annular part 35a extending annularly along a virtual plane orthogonal to the rotation axis line x and a sleeve 35b extending cylindrically around the rotation axis line x from an inner edge of the annular part 35a in the inner peripheral direction ID. A stator core 36 having an annular shape is attached at an outer peripheral surface of the sleeve 35b. A coil 37 is wound around each of a plurality of teeth of the stator core 36. The stator core 36 is formed of a stacked body of a magnetic material.

On the other hand, the rotor 34 includes a holder 38 fixed at the shaft 31 and a magnet (permanent magnet) 39 attached at the holder 38. The holder 38 includes an annular part 38a extending annularly along a virtual plane orthogonal to the rotation axis line x, and a tubular part (hereinafter referred to as a cylindrical part) 38b extending cylindrically around the rotation axis line x from an outer edge of the annular part 38a in the outer peripheral direction OD. The magnet 39 having an annular shape is fixed at an inner peripheral surface of the cylindrical part 38b. An inner peripheral surface of the magnet 39 opposes the outer peripheral surface of the stator core 36 via a gap.

The shaft 31 is rotatably supported by a bearing 40 disposed in a through-hole 32c formed at the case 32 and a bearing 41 disposed in the sleeve 35b of the base 35. The bearings 40 and 41 are ball bearings, for example. Each of the bearings 40 and 41 includes an outer ring, an inner ring, and rolling elements, that is, balls disposed between the outer ring and the inner ring. The shaft 31 protrudes outward from a hole 17a passing through the upper part 17 of the cover 12 along the rotation axis line x. The upper part 17 defines an upper surface 17b extending along a virtual plane orthogonal to the rotation axis line x. The hole 17a is formed at the upper surface 17b. In this example, at least a part of the bearing 40 in the upward direction UD is disposed inside the hole 17a.

A bush 42 is attached at a part of the shaft 31 protruding in the upward direction UD with respect to the upper surface 17b of the upper part 17. The bush 42 is attached at the shaft 31 by press-fitting, for example. The bush 42 includes a part having a large outer size and a part having a small outer size in a radial direction of the shaft 31. Specifically, the bush 42 includes a large-diameter part 42a extending annularly around the rotation axis line x in the outer peripheral direction OD with a first diameter, and a small-diameter part 42b extending annularly around the rotation axis line x in the outer peripheral direction OD with a second diameter smaller than the first diameter. In this example, the large-diameter part 42a extends with a larger diameter than the hole 17a. The large-diameter part 42a and the small-diameter part 42b are integrally formed of, for example, a metallic material.

The large-diameter part 42a is disposed in the downward direction DD with respect to the small-diameter part 42b. In this example, the small-diameter part 42b has, for example, a tubular shape extending in the axial direction, that is, the longitudinal direction. A lower surface of the large-diameter part 42a opposes the upper surface 17b of the cover 12 in the longitudinal direction. That is, a gap is formed between the lower surface of the large-diameter part 42a and the upper surface 17b of the cover 12. The size of the gap is set to a size not causing contact between a lower surface of the bush 42 and the upper surface 17b of the cover 12 when the shaft 31 and the bush 42 rotate about the rotation axis line x, for example. Further, the gap is smaller than a thickness of the large-diameter part 42a in the axial direction. Further, the gap may be smaller than the size of a magnetic gap between the stator core 36 and the magnet 39 in the radial direction of the shaft 31. The bearings 40 and 41 of the motor 30 are disposed at the cover 12 side with respect to the bush 42.

One or a plurality of electronic components 50 are accommodated in the housing 11 of the casing 10. The electronic component 50 includes a board (hereinafter referred to as a control circuit board) 51 constituting a control circuit and a board (hereinafter referred to as a power supply circuit board) 52 constituting a power supply circuit. The power supply circuit board 52 is an AC/DC converter converting an alternating current from an external power supply into a direct current. The control circuit board 51 is electrically connected to the power supply circuit board 52. The motor 30 is electrically connected to the control circuit board 51. In this example, at the casing 10, the control circuit board 51 is disposed in a space S3 between a space S1 accommodating the motor 30 and a space S2 accommodating the power supply circuit board 52. That is, the space S1 is defined to be inside the cover 12, and the spaces S2 and S3 are defined to be inside the housing 11.

The control circuit board 51 is mounted with electronic components for, for example, performing control of an operation of the motor 30, and functions of wireless communication, a timer, and the like. As will be described later, when the electronic device 1 is incorporated in a smart home appliance, the electronic device 1 can wirelessly communicate with, for example, a smartphone of a user of the smart home appliance. The wireless communication includes, for example, Bluetooth (trade name) and Wi-Fi (trade name). The user can control an operation of the electronic device 1 through the user's smartphone. Specifically, the user can remotely control a rotation speed, a rotation direction, start and end of rotation, and the like of the motor 30, for example, from outside the user's home.

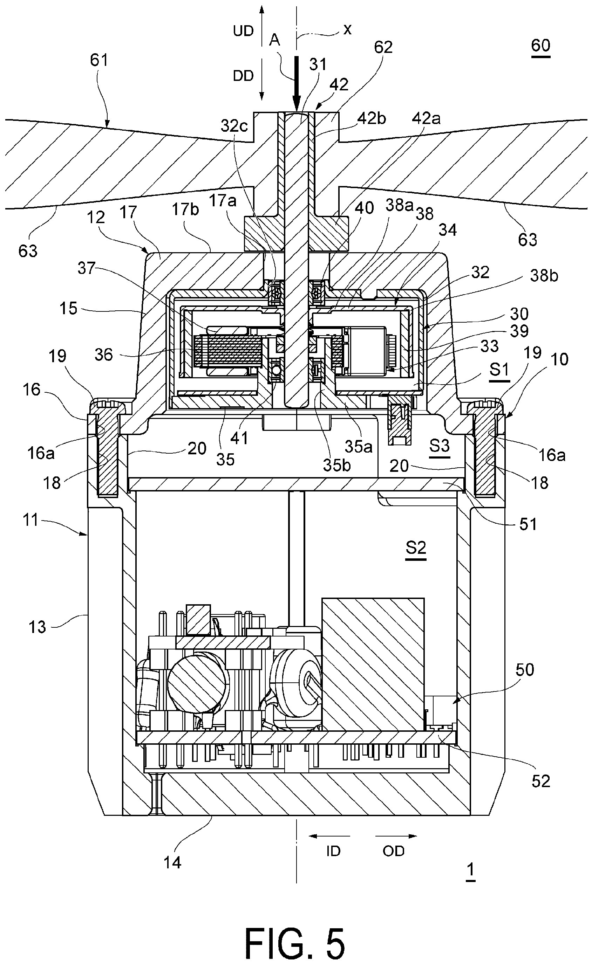

FIG. 5 is a partial cross-sectional view schematically illustrating the structure of a ventilation fan unit 60 according to a specific example. The ventilation fan unit 60 includes the above-described electronic device 1 and a fan 61 attached at the shaft 31 of the electronic device 1. The fan 61 includes, for example, a propeller fan. The fan 61 includes, for example, a hub 62 and a plurality of blades (hereinafter referred to as propellers) 63 extending from the hub 62 in a radial direction. In this example, the hub 62 is formed tubular. The hub 62 is attached at the shaft 31 of the motor 30. In this example, as will be described later, the hub 62 is attached at the small-diameter part 42b of the bush 42 attached at the shaft 31 by, for example, press-fitting.

The casing 10 of the electronic device 1 is attached at a casing (not illustrated) of the ventilation fan unit 60. The user can control switching between ON/OFF of the ventilation fan unit 60 (ON/OFF control of the motor 30) and air supply and air discharge (switching control of the motor 30 in the rotation direction), switching between strong and weak of the ventilation fan unit 60 (control of the rotation speed of the motor 30), timer control of ON/OFF of the ventilation fan unit 60, and the like via the user's smartphone. Thus, the user can remotely control the ventilation of the user's home, for example. The ventilation fan unit 60 may be automatically controlled in accordance with an output from a temperature/humidity sensor or an airflow sensor (both not illustrated).

When such a ventilation fan unit 60 is assembled, the fan 61 is attached at the completed electronic device 1. The hub 62 of the fan 61 is press-fitted at the shaft 31 and the small-diameter part 42b of the bush 42, for example, from the upward direction UD to the downward direction DD of the shaft 31. At this time, when the shaft 31 is about to be pushed into the casing 10 in the downward direction DD (in a direction of an arrow A in FIG. 5) along the rotation axis line x, the lower surface of the large-diameter part 42a of the bush 42 is received by the upper surface 17b of the cover 12. As a result, excessive pushing of the shaft 31 into the motor 30 can be reliably prevented. Damage to the bearings 40 and 41 due to pushing of the shaft 31 can be reliably avoided.

In particular, when a preload is applied to the bearings 40 and 41, for example, by using coil springs, the shaft 31 is allowed to be slightly displaced in the axial direction of the rotation axis line x. In the electronic device 1 according to the present embodiment, the motor 30 is already incorporated in the casing 10, and an inner end of the shaft 31 in the downward direction DD is not supported at all. In such a case, due to the presence of the bush 42, displacement of the shaft 31 caused by pushing the shaft 31 into the casing 10 when the fan 61 is attached at the shaft 31 can be suppressed to only the gap between the lower surface of the large-diameter part 42a of the bush 42 and the upper surface 17b of the cover 12. Thus, excessive pushing of the shaft 31 into the motor 30 can be reliably prevented.

In the electronic device 1 as described above, the bush 42 is formed of the metal material from the viewpoint of dimensional accuracy, but may be integrally formed of a resin material, for example. In this case, the bush 42 may be attached at the shaft 31 by an adhesive or the like. Although the small-diameter part 42b of the bush 42 completely covers up to an upper end of the shaft 31 in the above-described example, the small-diameter part 42b need not cover up to the upper end of the shaft 31. That is, a part of the shaft 31 may be exposed in the upward direction UD from an upper end of the small-diameter part 42b. In this case, for example, the hub 62 of the fan 61 may be press-fitted at only the shaft 31. Further, the shaft 31 may be rotatably supported by the bearing 40 provided at the cover 13.

Although the present invention has been described above through the above embodiments, the technical scope of the present invention is not limited to the scope described in the above embodiment. Various modifications or improvements can be made to the above embodiments, and this is obvious to a person having skill in the art. Such modified or improved form is also included in the technical scope of the present invention, and this is obvious from the description of the claims.

The above-described embodiments are intended to facilitate the understanding of the present invention and are not intended to be construed as limiting the invention. Each component and the arrangement, material, condition, shape, size, or the like of the component provided in the above embodiments are not limited to the contents exemplified and may be changed accordingly. In addition, to the extent of not being technically inconsistent, the components illustrated in different embodiments may be partially replaced or combined.

### Reference Signs List

1 Electronic device, 10 Casing, 11 Housing, 12 Cover, 13 Side wall part, 14 Bottom part, 15 Tubular part, 16 Flange part, 16a Through-hole, 17 Upper part, 17a Hole, 17b Upper surface, 18 Screw hole, 19 Screw, 20 Boss part, 21 Through-hole, 22 Screw, 30 Motor, 31 Shaft, 32 Case, 32a Upper part, 32b Screw hole, 32c Through-hole, 33 Stator, 34 Rotor, 35 Base, 35a Annular part, 35b Sleeve, 36 Stator core, 37 Coil, 38 Holder, 38a Annular part, 38b Cylindrical part, 39 Magnet, 40 Bearing, 41 Bearing, 42 Bush, 42a Large-diameter part, 42b Small-diameter part, 50 Electronic component, 51 Control circuit board (control circuit), 52 Power supply circuit board (power supply circuit) 60 Ventilation fan unit, 61 Fan, 62 Hub, 63 Propeller, DD Downward direction, ID Inner peripheral direction, OD Outer peripheral direction, S1, S2, S3 Space, UD Upward direction, x Rotation axis

## Claims

1. An electronic device (1) comprising:
a casing (10) including a cover (12) including a hole (17a) and a surface (17b) forming the hole (17a) and a housing (11) covered by the cover (12);
a motor (30) accommodated in the cover (12); and
one or a plurality of electronic components (50) accommodated in the housing (11), wherein
a shaft (31) of the motor (30) is disposed inside the hole (17a) of the cover (12),
the shaft (31) is provided with a bush (42), and
the bush (42) opposes a surface (17b) of the cover (12) in a longitudinal direction of the shaft (31).

2. The electronic device (1) according to claim 1, wherein
a bearing (40, 41) is disposed inside the hole (17a) of the cover (12), and
the bearing (40, 41) is disposed at the cover side with respect to the bush (42).

3. The electronic device (1) according to claim 1 or 2, wherein the motor (30) includes the shaft (31), a plurality of bearings (40, 41) supporting the shaft (31), and a case (32).

4. The electronic device (1) according to any one of claims 1 to 3, wherein
the one or a plurality of electronic components (50) include a control circuit (51) and a power supply circuit (52), and
the control circuit (51) is disposed between a space S1 accommodating the motor (30) and a space S2 accommodating the power supply circuit (52).
